**Europäisches Patentamt**

**European Patent Office**

**Office européen des brevets**

(11) Numéro de publication: **0 206 864**
**A1**

## (12) DEMANDE DE BREVET EUROPEEN

(21) Numéro de dépôt: **86401114.3**

(22) Date de dépôt: **27.05.86**

(51) Int. Cl.⁴: **B 01 D 46/30,** B 08 B 15/02, B 01 D 46/10

(30) Priorité: **05.06.85 FR 8508485**

(43) Date de publication de la demande: **30.12.86**
**Bulletin 86/52**

(84) Etats contractants désignés: **AT BE CH DE GB IT LI LU NL SE**

(71) Demandeur: **Hauville, François, 264, rue de la Villette Saint Pierre les Elbeuf, F-76320 Caudebec-les-Elbeuf (FR)**

(72) Inventeur: **Hauville, François, 264, rue de la Villette Saint Pierre les Elbeuf, F-76320 Caudebec-les-Elbeuf (FR)**

(74) Mandataire: **Armengaud, Charles et al, Cabinet ARMENGAUD AINE 3, Avenue Bugeaud, F-75116 Paris (FR)**

(54) **Dispositif de filtration destiné aux installations de filtration utilisant des batteries de filtres.**

(57) Dispositif de filtration, destiné aux installations de filtration utilisant des batteries de filtres placées entre deux enceintes reliées entre elles et entre lesquelles existe une différence de pression: une enceinte en dépression secondaire et une enceinte en dépression plus importante ou dépression principale, en vue de la filtration d'un milieu gazeux tel que l'air, pollué dans l'enceinte en dépression secondaire pour son rejet, épuré, dans l'atmosphère, à partir de l'enceinte en dépression principale, caractérisé en ce que les filtres (a) sont inclus chacun dans un support (1) agencé et conformé de façon à déterminer deux chambres: une chambre amont d'entrée (2) en communication avec l'enceinte (D) en dépression secondaire et une chambre aval (3) de sortie reliée à l'enceinte (C) en dépression principale, le filtre (a) étant placé entre ces chambres.

- 1 -

## Dispositif de filtration destiné aux installations de filtration utilisant des batteries de filtres

La présente invention concerne un dispositif de filtration destiné à équiper les installations de filtration utilisant des batteries de filtres, comme par exemple les stations d'épuration d'air des hôpitaux, des aéroports, des industries et plus particulièrement les hottes de laboratoires, ce dispositif permettant d'augmenter le débit et la capacité de filtration de ces installations.

Il est bien connu, pour augmenter le débit des filtres d'augmenter leur surface, mais alors leur encombrement devient un inconvénient. Pour augmenter le débit d'un filtre sans en augmenter la surface, il est possible de forcer le débit et donc la vitesse de passage des milieux à filtrer à travers le filtre. Mais alors l'augmentation de la dépression ou de la pression qui va de pair avec l'augmentation du débit n'est pas compatible avec la bonne tenue du filtre et entraîne pour les filtres séparateurs la rupture des porosités qui composent le filtre ou leur colmatage prématuré et, pour les filtres fonctionnant par rétention moléculaire, une baisse considérable du rendement de la rétention, et, en toute hypothèse une diminution de la qualité de la filtration.

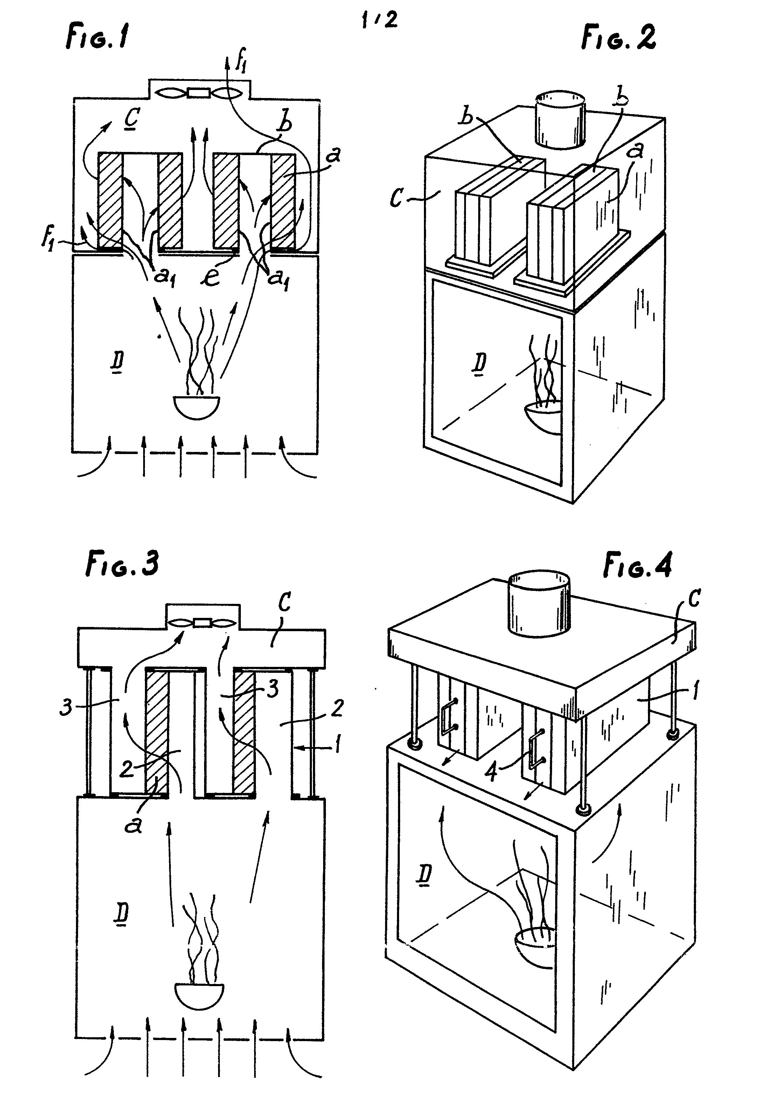

Pour éviter tous ces inconvénients il est classique d'utiliser, comme le montrent les figures 1 et 2 des dessins annexés, des cellules doubles de filtration $\underline{b}$ comportant chacune deux rangées de filtres $\underline{a}$ à faces filtrantes $\underline{a}_1$ opposées, placées côte à côte dans un caisson en dépression. Mais, le fait de placer les filtres à l'intérieur d'un caisson pose des problèmes d'étanchéité dont la défectuosité provoque un "court-circuit"

- 2 -

dans la filtration en permettant au milieu à filtrer de passer en dehors du filtre comme le montrent les flèches $\underline{f}_1$ apparaissant sur la figure l. En outre, ainsi qu'il ressort clairement de la figure 2 l'inclusion des filtres dans le caisson les rend inaccessibles sans un démontage du caisson.

L'invention concerne un dispositif qui permet, de façon particulièrement simple, efficace et fiable, et avec le minimum d'encombrement de réaliser, en utilisant au maximum la capacité de filtration de l'installation, un débit optimal de filtration, les dispositions adoptées suivant l'invention permettant en outre l'accessibilité totale des éléments filtrants.

Le dispositif suivant l'invention est caractérisé en ce que chaque filtre est inclus dans un support agencé de façon à constituer deux chambres, entre lesquelles est monté le filtre : une chambre amont d'entrée en communication avec une enceinte en dépression secondaire et une chambre aval de sortie communiquant avec l'enceinte en dépression principale.

L'ensemble filtrant ainsi constitué sert, dans ces conditions, de jonction et de conduit externe filtrant entre les deux enceintes.

Les divers caractéristiques et avantages de l'invention ressortiront de la description qui va suivre de deux de ses formes possibles de réalisation, l'une d'entre elles étant appliquée à une hotte de laboratoire.

Il est bien précisé qu'il s'agit uniquement d'exemples, tant de réalisation que d'application, la réalisation de l'invention pouvant donner lieu à de nombreuses variantes sans que, ce faisant, on sorte de son cadre. Quant à son application, elle n'est évidemment pas limitée aux hottes de laboratoire, cette application pouvant être envisagée toutes les fois qu'il s'agit de filtrer un milieu gazeux pollué provenant d'une enceinte en dépression secondaire, reliée à une enceinte en dépression principale, de laquelle le milieu doit être évacué, filtré, dans l'environnement.

Au cours de cette description, on se réfère aux dessins ci-joints qui montrent :

Fig. 3 et 4    respectivement des vues en élévation de face et en perspective d'une hotte de laboratoire munie d'un dispositif suivant l'invention,

Fig. 5 et 6    des vues en coupe de profil, et

Fig. 7    une vue en perspective du dispositif suivant l'invention,

Fig. 8    une vue en coupe de profil d'une autre forme de réalisation de l'invention.

Une hotte de laboratoire à filtration des toxiques a pour mission de pomper dynamiquement par dépression d'air les toxiques émis à l'intérieur de l'enceinte dite de manipulation et de faire passer cet air toxique à travers un ou plusieurs filtres en dépression afin de l'épurer et de le rejeter dans l'air ambiant à la pression atmosphérique.

Dans ce but, une telle hotte comporte, comme le montre la Fig. 2 :
- des filtres a montés en batterie côte à côte en communication avec une chambre C et une chambre D,
- une chambre en dépression principale C montée en aval des filtres et qui est destinée à pomper dynamiquement à travers les filtres,
- une chambre en dépression secondaire D, montée en amont des filtres et dans laquelle sont effectuées des manipulations toxiques et qui est en communication restreinte avec l'atmosphère par dépression.

Dans une hotte de laboratoire classique telle que celle représentée aux Fig. 1 et 2, munie de filtres a montés en batterie, il y a un danger permanent de fuites des toxiques contenus dans l'enceinte en dépression secondaire D vers la chambre à dépression principale C par un court-circuit provoqué par une défaillance d'étanchéité comme le montrent les flèches $F_1$ sur la figure 1, puisque l'air de l'enceinte C qui environne le filtre est en dépression. D'autre part, comme le montre la Fig. 2 les filtres a ne sont accessibles que par le démontage préalable d'un des côtés du caisson C en dépression principale et par le démontage des filtres a eux-mêmes dont les entrées d'air sont nécessairement munies d'un joint comprimé e afin d'assurer l'étanchéité entre la chambre à émission de toxiques D en dépression secondaire et la chambre porte-filtres en dépression principale C.

- 4 -

Ces contraintes structurelles sont de nature à rendre l'utilisation de ce type d'enceintes à filtration , difficile quant à la maintenance de leurs filtres et hasardeuse quant à la certitude d'une filtration totale puisque les toxiques court-circuitant les éléments filtrants peuvent être rejetés dans l'air ambiant.

Ces inconvénients sont totalement éliminés grâce à l'invention.

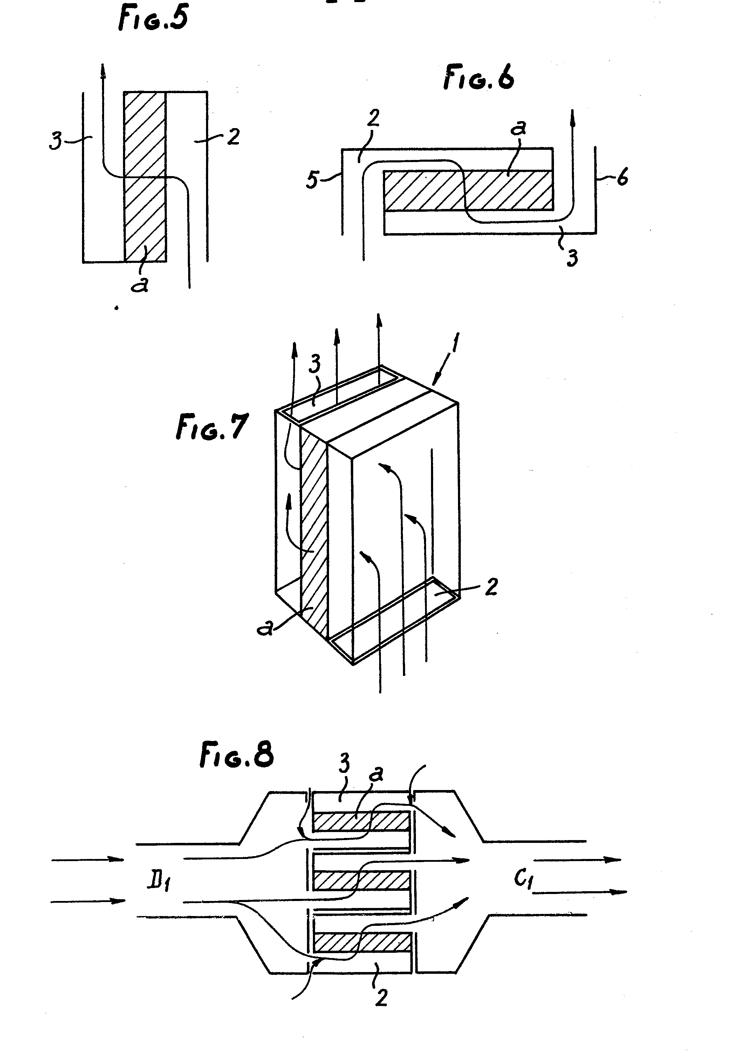

En effet, conformément à l'invention les filtres a ne sont plus logés à l'intérieur de l'enceinte C en dépression principale mais sont inclus chacun dans un support 1 (voir en particulier Fig. 7) agencé et conformé de façon à déterminer deux chambres : une chambre amont d'entrée 2, en communication avec l'enceinte D en dépression secondaire où ont lieu les manipulations et une chambre aval de sortie 3, en communication avec l'enceinte C en dépression principale. Entre ces chambres est placé le filtre a .

Ainsi, grâce aux dispositions adoptées suivant l'invention, les filtres servent de jonction et de conduits entre l'enceinte en dépression principale et l'enceinte en dépression secondaire.

Ces filtres sont en conséquence environnés par de l'air ambiant à la pression atmosphérique et non plus par de l'air en dépression comme dans les systèmes connus.

Dès lors, si des fuites se produisent au niveau des jonctions des filtres, ces fuites ne pourront être que dans le sens : air propre - air propre ou dans le sens air propre - air pollué, mais jamais entre air pollué et air propre, comme cela se produit dans les systèmes classiques tel que celui représenté aux Fig. 1 et 2.

D'autre part, comme le montre la Fig. 4, la conception suivant l'invention permet une accessibilité directe des filtres sans démontage quelconque et il devient inutile d'utiliser un joint comprimé puisque les fuites ne sont plus à craindre. L'invention permet d'utiliser des filtres sous forme de boîtiers comme le montre la Fig. 2, boîtiers munis de poignées 4 destinées à faciliter leur préhension.

0206864

En définitive, l'invention permet d'obtenir d'une manière radicale la maintenance des filtres et la fiabilité de la filtration.

Bien entendu, l'invention n'est pas limitée dans son application aux enceintes telles que hottes, de manipulation de toxiques, citée uniquement à titre d'exemple, mais elle peut s'appliquer avantageusement à tout système de filtration tel que celui représenté à la figure 8, dans lequel des dispositifs suivant l'invention relient deux enceintes $C_1$ et $D_1$ en dépression différentielle établies sur l'écoulement d'un fluide gazeux toxique qu'il s'agit de filtrer.

En outre, le nombre de filtres munis de leur support et susceptibles d'être montés en batterie peut être quelconque et toutes les configurations conduisant à l'utilisation de deux chambres pour chaque filtre peuvent être envisagées, que ces chambres soient ou non attenantes au filtre ou fixées à ce dernier de façon définitive ou amovible.

A ce propos, la Fig. 6 montre un dispositif suivant l'invention aménagé pour des filtres utilisés horizontalement, les chambres d'entrée et de sortie 2 et 3 étant munies de conduits 5 et 6 destinés à permettre l'entrée du fluide gazeux à filtrer et sa sortie du filtre vers l'enceinte à dépression principale.

0206864

- 1 -

## Revendications

1. Dispositif de filtration, destiné aux installations de filtration utilisant des batteries de filtres placées entre deux enceintes reliées entre elles et entre lesquelles existe une différence de pression : une enceinte en dépression secondaire et une enceinte en dépression plus importante ou dépression principale, en vue de la filtration d'un milieu gazeux tel que l'air, pollué dans l'enceinte en dépression secondaire pour son rejet, épuré, dans l'atmosphère, à partir de l'enceinte en dépression principale, caractérisé en ce que les filtres a sont inclus chacun dans un support (1) agencé et conformé de façon à déterminer deux chambres : une chambre amont d'entrée (2) en communication avec l'enceinte (D) en dépression secondaire et une chambre aval (3) de sortie reliée à l'enceinte (C) en dépression principale, le filtre (a) étant placé entre ces chambres.

2. Dispositif suivant la revendication 1, caractérisé en ce que les filtres et leur support servent de jonction et de conduits entre l'enceinte en dépression secondaire et l'enceinte en dépression principale.

3. Dispositif suivant l'une quelconque des revendications précédentes, caractérisé en ce que, lorsque le filtre est placé horizontalement, le support de filtre est conformé de façon à former deux conduits débouchant l'un (5) dans la chambre amont d'entrée (2) reliée à l'enceinte en dépression secondaire (D), l'autre (6) conduisant de la chambre aval de sortie (3) à l'enceinte en dépression principale (C).

4. Dispositif suivant l'une quelconque des revendications précédentes, caractérisé en ce que les chambres (2, 3) entourant le filtre sont rendues solidaires de ce dernier de façon fixe ou amovible.

5. Application du dispositif suivant l'une quelconque des revendications précédentes aux hottes de laboratoire.

0206864

1'2

FIG. 1

FIG. 2

FIG. 3

FIG. 4

0206864

2/2

Fig.5

Fig.6

Fig.7

Fig.8

Office européen
des brevets

**RAPPORT DE RECHERCHE EUROPEENNE**

Numéro de la demande

EP 86 40 1114

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 049 406 (AMERICAN AIR FILTER CO.) <br> * Figure 2 * <br><br> ----- | | B 01 D 46/30 <br> B 08 B 15/02 <br> B 01 D 46/10 |

DOMAINES TECHNIQUES
RECHERCHES (Int. Cl.4)

B 01 D
B 08 B
F 24 F

Le présent rapport de recherche a été établi pour toutes les revendications

| Lieu de la recherche | Date d'achèvement de la recherche | Examinateur |
|---|---|---|
| LA HAYE | 01-07-1986 | PYFFEROEN K. |